# EUROPÄISCHE PATENTANMELDUNG

(11) **EP 1 398 201 A2**
(43) Veröffentlichungstag der Anmeldung: **17.03.2004**
(21) Anmeldenummer: 03019249.6
(22) Anmeldetag: 26.08.2003
(51) Int. Cl.: B60K 15/07

(54) **Flurförderzeug**

(30) Priorität: 13.09.2002 DE 10242619
(71) Anmelder: STILL GMBH, D-22113 Hamburg (DE)
(72) Erfinder: Leifert, Torsten, Dr., 21360 Vögelsen (DE)
(74) Vertreter: Lang, Michael

(57) **Zusammenfassung**

Gegenstand der Erfindung ist ein Flurförderzeug, insbesondere Gabelstapler, mit einem elektrischen Antrieb und einer auf gasförmigen Medien basierenden Energieversorgung. Mindestens ein Druckbehälter zur Speicherung des gasförmigen Mediums ist in einer Haltevorrichtung, die zusammen mit dem Druckbehälter einfach austauschbar ist, im unteren Bereich des Flurförderzeugs (5), zwischen den Achsen (7) angebracht. Vorteilhafterweise sind in der Haltevorrichtung alle wesentlichen zur Erzeugung elektrischer Energie aus dem gasförmigen Medium nötigen Vorrichtungen angebracht.

## Beschreibung

Die Erfindung betrifft ein Flurförderzeug, insbesondere Gabelstapler, mit einem elektrischen Antrieb und einer auf gasförmigen Medien basierenden Energieversorgung.

Bei Flurförderzeugen mit höheren Tragfähigkeiten und Leistungsanforderungen werden vorzugsweise Verbrennungsmotoren eingesetzt. Sehr weit verbreitet sind dabei Dieselmotoren, da diese sehr wirtschaftlich zu betreiben sind und die Treibstoffversorgung einfach ist. Bei häufigem Einsatz im Innenbereich, beispielsweise geschlossenen Fabrikhallen, können jedoch keine Dieselmotoren eingesetzt werden.

Flurförderzeuge mit Batteriebetrieb benötigen für hohe Leistungsanforderungen große Batteriekapazitäten und lange Ladezeiten. Um die Stillstandszeiten zu reduzieren, gibt es die Möglichkeit, die entladenen Batterien komplett gegen geladene auszutauschen. Dazu sind die Batterien meist in einer trogförmigen Vorrichtung untergebracht, die beispielsweise bei Gegengewichtsgabelstaplern zwischen den Achsen unter dem Fahrersitzplatz angebracht ist. Der Austausch dieses Batterietroges ist allerdings recht aufwändig und das Vorhalten von Wechselbatterien kostspielig.

Eine Alternative zum Batteriebetrieb bieten so genannte Treibgasstapler. Bei diesen wird ein Verbrennungsmotor mit einem Gasgemisch, zumeist Propan und Butan oder Erdgas, betrieben, das in entsprechenden Druckbehältem gelagert werden kann. Einige Gase und Gasgemische, wie beispielsweise Propan-Butan-Mischungen, sind bei Raumtemperatur unter hinreichend hohem Druck flüssig, sollen hier aber ebenfalls als gasförmiges Medium betrachtet werden. Die Abgaswerte sind für diesen Antrieb wesentlich niedriger als bei Dieselmotoren, Kosten und Stillstandszeiten dagegen deutlich geringer als bei Batteriebetrieb, da die Treibgasbehälter zumeist so angeordnet sind, dass leere Behälter leicht komplett gegen gefüllte auszutauschen sind und für Wartung und Anschaffung weniger Aufwand als bei den bei einem Flurförderzeug mit Elektroantrieb verwendeten Batterien und Ladegeräten nötig ist.

Eine Alternative sowohl zu Treibgasbetrieb als auch zu Batteriebetrieb stellt die Brennstoffzellentechnologie dar. Auch hier wird ein bei Raumtemperatur gasförmiger Energieträger genutzt, zumeist Wasserstoff, der beispielsweise in flüssiger Form in einem wärmeisolierten Druckbehälter vorgehalten wird. Wasserstoff als Energieträger kann aber auch als Brennstoff in einem entsprechend umgerüsteten Verbrennungsmotor verwendet werden. Die Anbringung eines Wasserstofftanks wird in ähnlicher Weise wie bei einem Treibgasbehälter vorgenommen werden, also beispielsweise bei einem Gegengewichtsstapler auf dem Gegengewicht. Der Vorteil eines Brennstoffzellensystems ist vor allem das völlige Fehlen schädlicher Abgase bei gleichzeitig sehr gutem Wirkungsgrad. Daher ist eine nachträgliche Umrüstung von Flurförderzeugen mit elektrischem Antrieb auf diese Energiequelle häufig wünschenswert. Der Aufwand hierbei ist allerdings aufgrund der neu zu installierenden Gasversorgung erheblich.

Druckgasbehälter sind meist im oberen Außenbereich des Flurförderzeugs, beispielsweise bei Gegengewichtstaplern auf dem Gegengewicht, montiert, da sie leicht austauschbar und daher frei zugänglich sein sollten. Dort beeinträchtigen sie häufig die Sicht der Bedienperson, besonders bei Rückwärtsfahrt, und sind vor Beschädigung nur unzureichend geschützt. Bei dieser Bauweise sind außerdem die zwei wesentlichen Komponenten der Energieversorgung, nämlich der Energiespeicher und der Energiewandler, weit voneinander getrennt angeordnet, was lange Leitungen mit großem Verlegungsaufwand bedingt.

Der Erfindung liegt daher die Aufgabe zugrunde, ein Flurförderzeug, insbesondere Gabelstapler, mit einem elektrischen Antrieb und einer auf gasförmigen Medien basierenden Energieversorgung zu schaffen, das eine allseitig freie Sicht des Fahrers, eine sichere Unterbringung einfach austauschbarer Druckbehälter und eine kompakte Anordnung der zur Erzeugung der elektrischen Energie verwendeten Komponenten ermöglicht.

Diese Aufgabe wird erfindungsgemäß dadurch gelöst, dass mindestens ein Druckbehälter zur Speicherung des gasförmigen Mediums in einer Haltevorrichtung, die zusammen mit dem Druckbehälter einfach austauschbar ist, im unteren Bereich des Flurförderzeugs, zwischen den Achsen angebracht ist.

Durch die Anordnung des Druckbehälters im unteren Bereich des Flurförderzeugs, zwischen den Achsen befindet sich der Druckbehälter unterhalb des Bedieners und beeinträchtigt damit dessen Gesichtskreis nicht. Gleichzeitig ist der Druckbehälter sicher vor Beschädigungen und in der Nähe des Energiewandlers angeordnet, so dass eine kompakte Anordnung der Komponenten der Energieversorgung mit kurzen Leitungswegen entsteht. Die Anbringung des Druckbehälters in einer Haltevorrichtung, die zusammen mit dem Druckbehälter austauschbar ist, erleichtert die Handhabung des Druckbehälters und erlaubt so, einen leeren Druckbehälter schnell zu entfemen und durch einen gefüllten zu ersetzen.

Besonders vorteilhaft ist es, wenn der Druckbehälter im Flurförderzeug befüllbar ist. Der aufwändige Austausch des leeren Druckbehälters wird so durch einen einfachen Tankvorgang ersetzt.

Vorteilhafterweise sind in der Haltevorrichtung, die zusammen mit dem Druckbehälter einfach austauschbar ist, weitere, insbesondere alle wesentlichen zur Erzeugung elektrischer Energie aus dem gasförmigen Medium nötigen Vorrichtungen angebracht. Dadurch sind die Komponenten möglichst kompakt angeordnet und es ist ein Austausch der kompletten Haltevorrichtung möglich. Dies ist bei Wartungsarbeiten und für einen Einsatz der Energieversorgung in unterschiedlichen Flurförderzeugen vorteilhaft.

In einer besonders vorteilhaften Ausbildung der Erfindung entspricht die Haltevorrichtung, die zusammen mit dem Druckbehälter einfach austauschbar ist, in ihren mechanischen Verbindungselementen und elektrischen Anschlüssen einem Batterietrog. Dadurch kann die Haltevorrichtung auch in Flurförderzeugen, die den entsprechenden Batterietrog verwenden, eingesetzt werden.

Besonders vorteilhaft ist es, wenn Vorrichtungen und Anschlüsse des Flurförderzeugs, zur Aufnahme einer Haltevorrichtung, die zusammen mit dem Druckbehälter einfach austauschbar ist, so ausgebildet sind, dass ein Batterietrog darin aufnehmbar ist. Dadurch kann das Flurförderzeug auf einfachem Weg von der Energieerzeugung durch gasförmige Medien auf Batteriebetrieb umgestellt werden.

Es ist weiterhin besonders vorteilhaft, wenn zur Erzeugung elektrischer Energie aus dem gasförmigen Medium ein Brennstoffzellensystem verwendet wird. Dieses bietet einen hohen Wirkungsgrad und unschädliche Abgase.

In einer weiteren vorteilhaften Ausgestaltung der Erfindung wird zur Erzeugung elektrischer Energie aus dem gasförmigen Medium eine Verbrennungskraftmaschine, insbesondere ein Kolbenmotor, verwendet. Diese Motoren sind robust und einfach zu fertigen.

Es ist von Vorteil, wenn der Hauptstrom der Luftversorgung der zur Erzeugung elektrischer Energie aus dem gasförmigen Medium nötigen Vorrichtungen quer zur Fahrzeuglängsachse verläuft. In den seitlichen Bereichen des Flurförderzeugs sind meist wenige Aggregate angebracht, so dass die Führung des Luftstroms einfach realisiert werden kann.

Vorteilhafterweise sind im Flurförderzeug Steuer- und Überwachungsvorrichtungen für die verschiedenen Betriebsprinzipien der Aggregate zur Erzeugung elektrischer Energie fest am Flurförderzeug, insbesondere am Fahrerplatz, angebracht. Dadurch kann der Zustand dieser Aggregate von der Bedienperson überwacht und gesteuert werden.

Weitere Vorteile und Einzelheiten der Erfindung werden anhand des in den schematischen Figuren dargestellten Ausführungsbeispiels näher erläutert. Dabei zeigt
- Figur 1: einen Gegengewichtsgabelstapler mit Treibgasantrieb,
- Figur 2: einen erfindungsgemäßen Gegengewichtsgabelstapler,
- Figur 3: eine Haltevorrichtung mit Druckgasbehältern und einem Brennstoffzellensystem für ein erfindungsgemäßes Flurförderzeug.

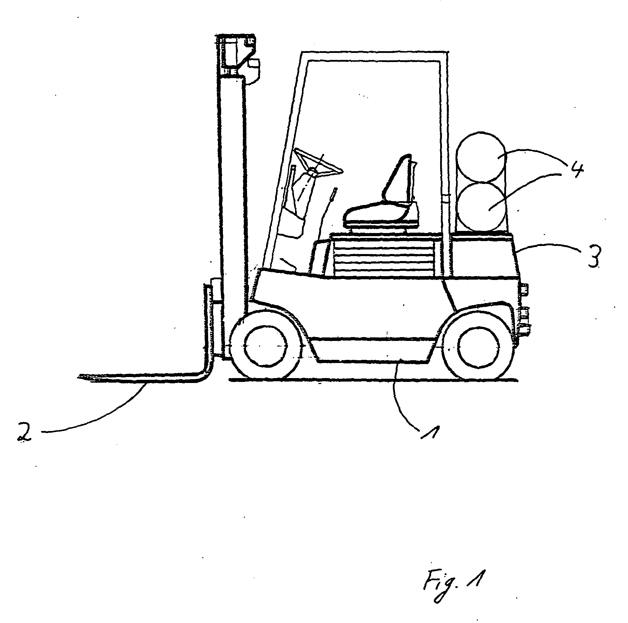

Figur 1 zeigt einen Gegengewichtsgabelstapler 1 mit Treibgasantrieb. Als Ausgleich für eine auf einer Gabel 2 transportierte Last ist im hinteren Bereich ein Gegengewicht 3 angebracht. Zur Versorgung des nicht dargestellten Fahrmotors mit Treibgas sind auf dem Gegengewicht 3 zwei Druckgasbehälter 4 angebracht. Diese behindern bei Rückwärtsfahrt die Sicht das Fahrers und können leicht beschädigt werden.

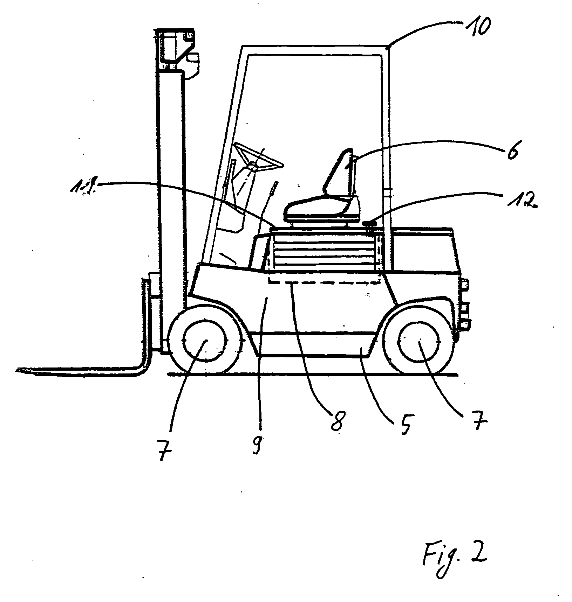

Figur 2 zeigt als Beispiel für ein erfindungsgemäßes Flurförderzeug einen Gegengewichtsgabelstapler 5. Unter einem Fahrersitz 6 ist zwischen den Achsen 7 ein Fach 8 für die Unterbringung einer nicht dargestellten Haltevorrichtung mit Druckgasbehältern angeordnet. ln diesem Bereich ist bei Staplem mit Verbrennungsmotor üblicherweise der Verbrennungsmotor angeordnet, so dass bei Treibgasantrieb die Druckgasbehälter in unmittelbarer Nähe des Motors liegen. Durch einen Rahmen 9 und eine Fahrerschutzkabine 10 sind die Druckgasbehälter optimal vor äußeren Einflüssen geschützt. Ein Austausch der Druckgasbehälter ist dennoch relativ einfach möglich, da sich eine Abdeckung 11 über dem Fach 8 leicht anheben lässt und dann der Austausch ähnlich wie bei der Anordnung von Druckgasbehältern 4 auf dem Gegengewicht 3 vorgenommen werden kann.

Auf einen Austausch der Druckgasbehälter kann verzichtet werden, wenn am Flurförderzeug 4 oder an der Haltevorrichtung mit Druckgasbehältern eine Vorrichtung 12 angebracht ist, über die die Druckgasbehälter befüllt werden können, ohne dass diese aus dem Fahrzeug 5 entnommen werden müssen. Damit ist das Auffüllen der Reserven ähnlich wie bei einem mit flüssigen Brennstoffen betriebenen Fahrzeug in kurzer Zeit und ohne großen Aufwand möglich. Der Anschluss einer Druckgaszuleitung kann mit den für solche Anwendungen typischen Mitteln, wie beispielsweise druckkodierten, also für unterschiedliche Druckstufen unterschiedlich ausgebildeten Tanknippeln erfolgen. Eine Platzierung auf der Fahrzeugseite mit dem Zustieg zur Fahrerschutzkabine 9 ist besonders günstig, da der Fahrer so besonders kurze Wege zwischen dem Fahrersitz 6, der Tankanlage und der Vorrichtung 12 zurückzulegen hat; durch eine Anordnung hinter dem Zustieg wird die Vorrichtung 12 vor Beschädigung geschützt.

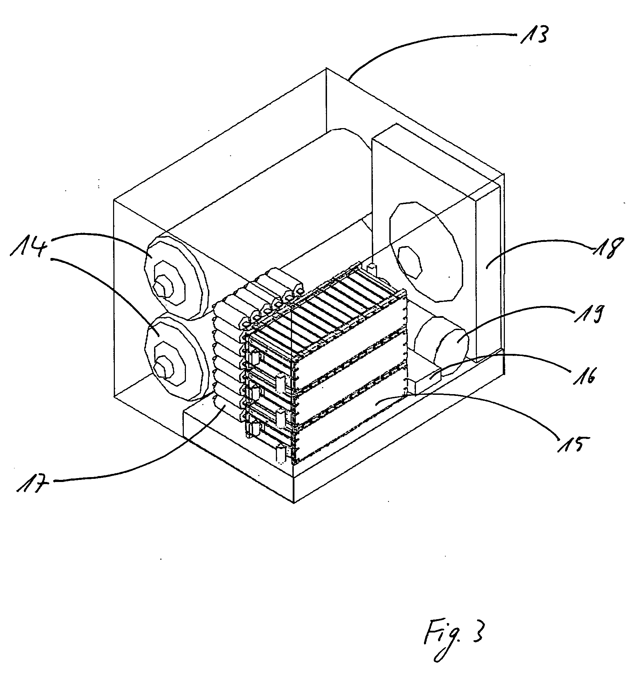

Ein Beispiel für eine Haltevorrichtung, die zusammen mit dem Druckgasbehälter einfach austauschbar ist, ist in Figur 3 dargestellt. Das Ausführungsbeispiel zeigt eine Haltevorrichtung 13, in der neben den Druckgasbehältern 14 weitere Aggregate zur Erzeugung elektrischer Energie aus dem Druckgas angebracht sind. Es handelt sich dabei um ein Brennstoffzellensystem. Die Haltevorrichtung 13 ist dazu trogähnlich ausgebildet und trägt neben den Druckgasbehältern 14 noch Brennstoffzellen 15, eine Steuerelektronik für die Brennstoffzelleneinheit 16, einen Zwischenspeicher für elektrische Energie 17, einen Kühler 18 und einen Kompressor 19. Von den Druckgasbehältern 14 strömt das Druckgas, in diesem Fall vorzugsweise Wasserstoff, zu den Brennstoffzellen 15. Der zur Oxidation benötigte Sauerstoff wird von dem Kompressor 19 mit der Umgebungsluft geliefert. Die beim Betrieb der Brennstoffzellen 15 entstehende Wärme wird über den Kühler 18 abgeführt. Damit sind sämtliche Aggregate, die zur Erzeugung von elektrischer Energie dienen, in der Haltevorrichtung 13 zusammengefasst. Analog dazu können auch bei Einsatz eines Verbrennungsmotors, der mit dem für Flurförderzeuge üblichen Treibgas (Propan-Butan-Mischung), aber auch mit anderen Gasen, wie beispielsweise Wasserstoff, betrieben werden kann, sämtliche benötigten Aggregate, wie Motor, Generator, Steuerelektronik, Kühler und Starterbatterie, in der Haltevorrichtung 13 angeordnet sein.

Die kompakte Anordnung aller zur Erzeugung elektrischer Energie aus dem gasförmigen Medium benötigter Aggregate in der Haltevorrichtung 13 ermöglicht auf einfache Weise den Tausch des kompletten Energieerzeugungssystems. lm Falle von Wartungs- oder Reparaturarbeiten an den Antriebsaggregaten kann durch einen einfachen Austausch gegen eine gleichartige Haltevorrichtung das Flurförderzeug weiterbetrieben werden, während diese Arbeiten stattfinden. Für die nachträgliche Umrüstung eines erfindungsgemäßen Flurförderzeugs von einer auf die andere Energieversorgung, beispielsweise von Treibgasbetrieb auf Brennstoffzellenbetrieb ist nur ein Austausch der Haltevorrichtung 13 erforderlich, ohne Umbauten am Flurförderzeug vornehmen zu müssen.

Die Haltevorrichtung 13 ist in ihren mechanischen Verbindungselementen und den elektrischen Anschlüssen mit einem Batterietrog identisch und auch die Vorrichtungen zur Aufnahme der Haltevorrichtung 13 im Flurförderzeug 5 sind so ausgebildet, dass diese einen Batterietrog aufnehmen können. Dadurch kann anstelle der Haltevorrichtung 13 ein Batterietrog verwendet werden, beispielsweise, wenn vollständige Abgasfreiheit gefordert ist und in der Haltevorrichtung 13 ein Treibgasantrieb installiert ist. Im Falle von Wartungs- oder Reparaturarbeiten an den Antriebsaggregaten kann durch einen einfachen Austausch gegen einen Batterietrog das Flurförderzeug weiterbetrieben werden, während diese Arbeiten stattfinden. lnsbesondere können Anschlüsse und Vorrichtungen für die Aufnahme des Batterietrogs so ausgebildet sein, dass ein bereits bei Flurförderzeugen üblicher Batterietrog verwendet werden kann. Dies ist dann von Vorteil, wenn bereits eine Flotte von elektrisch betriebenen Flurförderzeugen mit den dazugehörigen Batterien in einem Betrieb vorhanden ist. Auch die nachträgliche Umrüstung eines erfindungsgemäßen Flurförderzeugs auf Batteriebetrieb ist durch einfachen Austausch der Haltevorrichtung 13 möglich. Umgekehrt kann auch die Haltevorrichtung 13 in einem herkömmlichen Fahrzeug anstelle der Batterien verwendet werden, wenn eine ausreichende Luftzufuhr zu der Vorrichtung gewährleistet ist.

Der Luftstrom, der zur Kühlung der in der Haltevorrichtung 13 installierten Aggregate dient, verläuft im dargestellten Ausführungsbeispiel von einer Fahrzeugseite zur anderen. Da an den Fahrzeugseiten keine weiteren Aggregate angebracht sind, ist hier eine problemlose Durchströmung möglich, während beispielsweise eine Luftführung in Fahrzeuglängsrichtung durch das hinter der Haltevorrichtung 13 angeordnete Gegengewicht gestört würde und im Fußraum der Bedienperson zum Auftreten ungünstiger Zugluft führen kann. Abhängig vom verwendeten gasförmigen Medium ist die Luftführung in der Haltevorrichtung 13, besonders durch geeignete Platzierung von Belüftungsöffnungen, zudem so zu wählen, dass sich kein zündfähiges Gasgemisch in der Haltevorrichtung 13 ansammeln kann.

Über geeignete Anschlüsse, beispielsweise ein Bus-System, können Informationen zwischen der Haltevorrichtung 13 und dem Flurförderzeug 5 ausgetauscht werden. lm Flurförderzeug sind Steuer- und Überwachungsvorrichtungen für die verschiedenen Betriebsprinzipien zur Erzeugung elektrischer Energie, also vorzugsweise Brennstoffzellen, Verbrennungsmotor und Batterie, fest am Flurförderzeug, insbesondere am Fahrerplatz, angebracht, die es der Bedienperson ermöglichen, für den Betrieb wichtige Informationen, wie beispielsweise Tankfüllung oder Ladezustand, Betriebtemperaturen oder-drücke, zu überwachen und gegebenenfalls Eingriffe in den Betrieb der Aggregate vorzunehmen. Die Steuer- und Überwachungsvorrichtungen sind sinnvollerweise in der für solche Vorrichtungen üblichen Technik, wie Bildschirme und Tastaturen, ausgeführt.

## Patentansprüche

1. Flurförderzeug, insbesondere Gabelstapler, mit einem elektrischen Antrieb und einer auf gasförmigen Medien basierenden Energieversorgung, **dadurch gekennzeichnet, dass** mindestens ein Druckbehälter (14) zur Speicherung des gasförmigen Mediums in einer Haltevorrichtung (13), die zusammen mit dem Druckbehälter (14) einfach austauschbar ist, im unteren Bereich des Flurförderzeugs (5) zwischen den Achsen (7) angebracht ist.

2. Flurförderzeug nach Anspruch 1, **dadurch gekennzeichnet, dass** der Druckbehälter (14) im Flurförderzeug (5) befüllbar ist.

3. Flurförderzeug nach Anspruch 1 oder 2, **dadurch gekennzeichnet, dass** in der Haltevorrichtung (13) zwischen den Achsen (7) des Flurförderzeugs (5), die zusammen mit dem Druckbehälter (14) einfach austauschbar ist, weitere, insbesondere alle wesentlichen, zur Erzeugung elektrischer Energie aus dem gasförmigen Medium nötigen Vorrichtungen angebracht sind.

4. Flurförderzeug nach Anspruch 3, **dadurch gekennzeichnet, dass** die Haltevorrichtung (13) zwischen den Achsen (7) des Flurförderzeugs (5), die zusammen mit dem Druckbehälter (14) einfach austauschbar ist, in ihren mechanischen Verbindungselementen und elektrischen Anschlüssen einem Batterietrog entspricht.

5. Flurförderzeug nach einem der Ansprüche 1 bis 4, **dadurch gekennzeichnet, dass** ein Batterietrog vorgesehen ist, der an die Vorrichtungen und Anschlüsse des Flurförderzeugs (5) zur Aufnahme einer Haltevorrichtung (13), die zusammen mit dem Druckbehälter (14) einfach austauschbar ist, anschließbar ist.

6. Flurförderzeug nach einem der Ansprüche 1 bis 5, **dadurch gekennzeichnet, dass** zur Erzeugung elektrischer Energie aus dem gasförmigen Medium ein Brennstoffzellensystem verwendet wird.

7. Flurförderzeug nach einem der Ansprüche 1 bis 6, **dadurch gekennzeichnet, dass** zur Erzeugung elektrischer Energie aus dem gasförmigen Medium eine Verbrennungskraftmaschine, insbesondere ein Kolbenmotor, verwendet wird.

8. Flurförderzeug nach einem der Ansprüche 1 bis 7, **dadurch gekennzeichnet, dass** der Hauptstrom der Luftversorgung der zur Erzeugung elektrischer Energie aus dem gasförmigen Medium nötigen Vorrichtungen quer zur Fahrzeuglängsachse verläuft.

9. Flurförderzeug nach einem der Ansprüche 1 bis 8, **dadurch gekennzeichnet, dass** Steuer- und Überwachungsvorrichtungen für die verschiedenen Betriebsprinzipien der Aggregate zur Erzeugung elektrischer Energie fest am Flurförderzeug (5), insbesondere am Fahrerplatz, angebracht sind.
